# EUROPÄISCHE PATENTANMELDUNG

(11) **EP 4 125 013 A1**
(43) Veröffentlichungstag der Anmeldung: **01.02.2023**
(21) Anmeldenummer: 21188801.1
(22) Anmeldetag: 30.07.2021
(51) Int. Cl.: G06Q 10/06, G06Q 50/04

(54) **ERZEUGEN EINES ARBEITSPLANS FÜR EIN BAUTEIL**

(71) Anmelder: Siemens Aktiengesellschaft, 80333 München (DE)
(72) Erfinder: Krause, Stefan, 04177 Leipzig (DE); Lipp, Christian, 94065 Waldkirchen (DE); Myszkowski, Adam, 81739 München (DE); Nowitschkow, Alexander, 81739 München (DE); Robl, Peter, 94133 Röhrnbach (DE)

(57) **Zusammenfassung**

Die Erfindung betrifft ein Verfahren zum Erzeugen eines Arbeitsplans (WP20) für ein Bauteil (20), ein Computerprogrammprodukt sowie ein Arbeitsplanungssystem. Um das automatisierte Erstellen von Arbeitsplänen (WP20) für eine Vielzahl von Bauteilen (20) einer Teilefamilie (200) zu verbessern werden zum Erzeugen eines Arbeitsplans (WP20) für ein Bauteil, das eine geometrische Ausprägung einer Teilefamilie (200) ist, die folgenden Schritte vorgeschlagen:
- Bereitstellen eines Arbeitsplanmodells (M200) für die Teilefamilie (200), wobei das Arbeitsplanmodell (M200) Arbeitsvorgänge (WS1, ..., WSn) für voneinander verschiedene Ausprägungen von Bauteilen (20) umfasst,
- Bereitstellen von geometrischen Parametern (P20) des Bauteils (20) als Eingangsgröße für das Arbeitsplanmodell (M200) und
- Erzeugen des Arbeitsplans (WP20) für das Bauteil (20) durch Reduzieren des Arbeitsplanmodells (M200) auf die Arbeitsvorgänge (WS1, ..., WSn), die zum Herstellen des Bauteils (20) mit den geometrischen Parametern (P20) notwendig sind.

## Beschreibung

Die Erfindung betrifft ein Verfahren zum Erzeugen eines Arbeitsplans für ein Bauteil, ein Computerprogrammprodukt sowie ein Arbeitsplanungssystem.

Ein derartiges Verfahren kommt beispielsweise in einer industriellen Fertigung des Maschinenbaus zum Einsatz.

Zur Umsetzung eines individuellen Kundenauftrags legt ein Arbeitsvorbereiter manuell einen Arbeitsplan in einem ERP-System an, in dem die einzelnen Fertigungs- und Montageschritte (Arbeitsfolgen) des Erzeugnisses für die später folgende Produktion dokumentiert sind.

Für jede Ausprägung des Bauteils ist ein Arbeitsplan notwendig, der die einzelnen Schritte der Fertigung, ausgehend von einem zugewiesenen Rohteil, dokumentiert. Für die Fertigungs- und Montageabwicklung sind bei einer niedrigen Losgröße alternative Arbeitsplätze erforderlich, um Maschinenauslastungsabhängig die einzelnen Produkte bestmöglich durch die Produktion zu führen. Insbesondere bei geringen Losgrößen ist diese Arbeitsplanerstellung oft eine rein manuelle und hat einen hohen Beitrag an den Kosten des zu fertigenden Bauteils.

Der Erfindung liegt die Aufgabe zugrunde, das automatisierte Erstellen von Arbeitsplänen für eine Vielzahl von Bauteilen einer Teilefamilie zu verbessern.

Diese Aufgabe wird durch ein Verfahren mit den im Anspruch 1 angegebenen Merkmalen gelöst.

Das computerimplementierte Verfahren zum Erzeugen eines Arbeitsplans für ein Bauteil, das eine geometrische Ausprägung einer Teilefamilie ist, umfasst dabei die Schritte:
- Bereitstellen eines Arbeitsplanmodells für die Teilefamilie, wobei das Arbeitsplanmodell Arbeitsvorgänge für voneinander verschiedene Ausprägungen von Bauteilen umfasst,
- Bereitstellen von geometrischen Parametern des Bauteils als Eingangsgröße für das Arbeitsplanmodell und
- Erzeugen des Arbeitsplans für das Bauteil durch Reduzieren des Arbeitsplanmodells auf die Arbeitsvorgänge, die zum Herstellen des Bauteils mit den geometrischen Parametern notwendig sind.

Die Teilefamilie umfasst mehrere voneinander verschiedene Ausprägungen von Bauteilen die sich zumindest durch ihre Maße und/oder weiteren Eigenschaften (Härte/Material/...) unterscheiden. In anderen Worten handelt es sich bei der Teilefamilie um eine Familie von weiter nicht zerlegbaren Einzelteilen, deren Endform untereinander ähnlich ist. Ein Beispiel ist ein Stirnrad, diese Stirnräder sind untereinander dahingehend ähnlich, dass ein später zu reduzierendes Arbeitsplanmodell, also eine Art maximal-Arbeitsplan ausreicht, um alle benötigten Arbeitsvorgänge für alle Ausprägungen abzubilden. Für viele Maschinenelemente lässt sich so effizient und einfach ein Arbeitsplanmodell erstellen, um dann die Erstellung der Arbeitspläne deutlich zu verbessern.

Die geometrischen Parameter des Bauteils sind dabei die Maße, Toleranzen und weitere Parameter des Bauteils, die einen Einfluss auf die Fertigung und damit den Arbeitsplan haben.

Ein Beispiel für ein Stirnrad sind folgende Parameter:
CYL_D1 = Bohrungsdurchmesser
CYL_DT1 = Grundabmaß
L = Bohrungslänge
LT1 = Obere Toleranz
DA2 = Kopfkreisdurchmesser Verzahnung
W = Zahnweite
Bn_SITZ = Sitzart der Bohrung
CYL_DT2 = IT Klasse/Grundtoleranzgrad
LT2 = Untere Toleranz

Da das Arbeitsplanmodell Arbeitsvorgänge für die gesamte Teilefamilie aufweist, müssen die Arbeitsvorgänge reduziert werden, um einen Arbeitsplan für eine einzelnes Bauteil zu erstellen. In anderen Worten weist das Arbeitsplanmodell über 100% der notwendigen Arbeitsvorgänge für ein Bauteil auf, da auch andere Ausprägungen abgedeckt werden. Das Reduzieren wird auf Basis der geometrischen Parameter durchgeführt. Die geometrischen Paramter können dabei beispielsweise als sogenannte PMI ("Product and Manufacturing Information") im CAD Modell hinterlegt sein. Das Reduzieren des Arbeitsplanmodells ist nicht nur hinsichtlich der Rechenzeit effizient, sondern ist auch gut für einen Fertigungs-/Entwicklungsingenieur umsetzbar und pflegbar.

Notwendig sind Arbeitsvorgänge dann, wenn diese zum Erreichen einer Zielgeometrie des Bauteils oder einem Zwischenschritt auf ein Rohmaterial angewandt werden können.

Ein Arbeitsplan dokumentiert ausgehend von einem zugewiesenen Rohteil die einzelnen Arbeitsvorgänge der Fertigung des Bauteils.

Die einzelnen Arbeitsvorgänge beinhalten dabei die zur Durchführung des Arbeitsvorgangs notwendigen Schritte. Der Arbeitsplan beschreibt die richtige Reihenfolge zur Durchführung der Arbeitsvorgänge in der Fertigung. Die Reihenfolge kann dabei neben technischen auch ökonomische Kriterien berücksichtigen.

Für das Herstellen einer Bohrung in einem Bauteil können beispielsweise folgende technische Parameter Teil des Arbeitsvorgangs im Arbeitsplan sein:
Auswahl des Bohrers (HSS/...)
Drehzahl des Bohrers U/min
Vorschubgeschwindigkeit in m/min
Durchmesser des Bohrers
Zieldurchmesser der Bohrung

Weiterhin können dem Arbeitsvorgang auch Arbeitsmittel (Werkzeuge) zugewiesen sein.

In einer weiteren Ausführungsform weist das Arbeitsplanmodell zumindest eine Regel auf, die auf Basis der geometrischen Parameter ein Rohmaterial für das Bauteil auswählt.

Im Sinne der Arbeitsvorgänge kann dies als Schritt "Bereitstellen eines Rohmaterials" verstanden werden. Dieser Schritt kann auch als Initialisierung für einen Entscheidungsbaum verwendet werden. In diesem bevorzugt ersten Schritt wird regelbasiert das zu verwendende Rohmaterial ausgewählt, indem unter anderen das bestehende Rohmaterial mit der Zielgeometrie des Bauteils abgeglichen wird. Für ein Stirnrad kann dabei beispielsweise ein Rohstangenmaterial oder eine bspw. vorgeschmiedete Lochscheibe verwendet werden. Die verfügbaren Rohteile können nach Werkstoff gefiltert werden. Bei beiden Materialien wird der Außendurchmesser des Fertigteils mit dem Außendurchmesser des Rohmaterials verglichen, der Außendurchmesser des Rohmaterials ist hier größer als der Außendurchmesser des Fertigteils zu wählen, da vorzugsweise subtraktive Bearbeitungsverfahren zum Einsatz kommen.

In einer weiteren Ausführungsform weist das Arbeitsplanmodell zumindest einen auf Regeln basierenden Entscheidungsbaum auf. Dabei wird zumindest ein Teil der Arbeitsvorgänge durch Anwendung der Regeln auf die geometrischen Parameter ermittelt. Die Struktur als Entscheidungsbaum hat den Vorteil, dass die Arbeitsvorgänge bereits in der Richtigen Reihenfolge im Arbeitsplanmodell hinterlegt sind und Fallunterscheidungen gut abgebildet werden können. Es können bevorzugt alle Arbeitsvorgänge im regelbasierten Arbeitsplanmodell hinterlegt sein. In einer bevorzugten Ausführungsform sind alle Arbeitsvorgänge für eine Teilefamilie im Entscheidungsbaum hinterlegt. Wird entwicklungsseitig der Teilefamilie ein weiteres Bauteil hinzugefügt, so kann der Entscheidungsbaum einfach um die Arbeitsvorgänge für die Teilefamilie erweitert werden.

Bevorzugt anschließend an die Auswahl des Rohmaterials wird das im Entscheidungsbaum hinterlegte Regelwerk auf die geometrischen Parameter, z. B. aus einer Datenbank angewendet. Über vorzugsweise subtraktive Bearbeitungsverfahren wird die Zielgeometrie, also die in den geometrischen Parameter definierte Geometrie, ausgehend von dem zuvor ausgewählten Rohmaterial erreicht. Die hierfür notwendigen Arbeitsvorgänge bzw. Arbeitsvorgänge werden sukzessive regelbasiert dem Arbeitsplan hinzugefügt. Die Arbeitsvorgänge bzw. Arbeitsvorgänge können jeweils um Arbeitsstationen ergänzt werden, die nach festgelegten Kriterien, wie beispielsweise der Fertigungstechnologie im Stande sind, den Arbeitsvorgang umzusetzen.

In einer weiteren Ausführungsform ist das Arbeitsplanmodell zum Erzeugen von Arbeitsvorgängen für die subtraktive Bearbeitung des Bauteils. Es hat sich gezeigt, dass die insbesondere regelbasierte Reduzierung des Arbeitsplanmodells besonders vorteilhaft mit subtraktiven, z.B. spanenden, Verfahren durchgeführt werden kann. Die Regeln können so auf dem Vergleich der notwendigen Zieldimensionen mit den Ursprungs-Dimensionen des Rohteils basieren. Teile des Arbeitsplanmodells können zum ausschließlichen Erzeugen von subtraktiven Arbeitsvorgängen ausgebildet sein. Insbesondere können Regeln zum Erzeugen von subtraktiven Arbeitsvorgängen ausgebildet sein.

In einer weiteren Ausführungsform weist das Arbeitsplanmodell zumindest eine Regel auf, die auf Basis ein oder mehrerer der geometrischen Parameter Zugabewerte für einzelne Dimensionen des Bauteils ermittelt. Diese Zugabewerte sind bei über/unterschreiten von gewissen Dimensionen notwendig, um am Ende des Fertigungsvorgangs Maßhaltigkeit bzgl. der geometrischen Parameter und Toleranzen zu erreichen. Solche Zugaben können beispielsweise bei Zuschnitt eines Stangenmaterials ein eine Abhängigkeit vom Rohdurchmesser aufweisen. Ein weiteres Beispiel ist die eine Zugabe beim Durchmesser einer Bohrung für Härteverzug und/oder Passung. Des Weiteren kann auch ein Aufmaß als Zugabe, z. B. in einem Nutbereich, vorgesehen werden. Auch beim Arbeitsvorgang Vordrehen und anschließendem Feindrehen und/oder Schlichten kann eine Zugabe vorgesehen werden.

Wird ein Stangenmaterial als Rohmaterial verwendet, so kann ein Zuschnitt unter Zugabe eines Aufmaßes in Abhängigkeit von Fertigteildurchmesser erforderlich sein, um so den eigentlichen Ausgangsrohling zu erhalten. Neben der werkstofftechnischen und geometrischen Betrachtung können weitere Kriterien herangezogen werden (z.B. Wirtschaftlichkeits-Kriterien), um das optimale verfügbare Ausgangsmaterial auszuwählen.

In einer weiteren Ausführungsform wird zum Erzeugen des Arbeitsplans für jeden Arbeitsvorgang ein Arbeitsplatz bestimmt. Alternativ oder ergänzend kann zum Erzeugen des Arbeitsplans für zumindest einen Teil der Arbeitsvorgänge ein Vorzugsarbeitsplatz und zum Vorzugsarbeitsplatz alternative Arbeitsplätze bestimmt werden. Dies hat den Vorteil, dass beim Eintakten des Arbeitsplans in die Fertigung die alternativen Berücksichtigt werden können und somit eine schnellere Fertigung des Bauteils erzielt werden kann.

Für die anschließend folgende Arbeitsplatzzuordnung werden zunächst die verfügbaren Arbeitsplätze nach der Fertigungstechnologie wie beispielsweise Drehen oder Fräsen gefiltert, die zur Realisierung des Arbeitsvorgangs erforderlich ist. Anschließend werden die Rohmaterialmaße mit dem Arbeitsbereich der Maschine verglichen, um so eine Liste an Arbeitsplätzen zu erzeugen, die dazu in der Lage sind, den zuvor definierten Arbeitsvorgang umzusetzen. Durch die Hinterlegung der Maschinen-Vorzugs-Arbeitsbereiche können die Maschinen nochmals feiner in Abhängigkeit von der Rohteilgeometrie optimiert werden. Die Verfügbaren Arbeitsplätze werden je Arbeitsvorgang unter der Berücksichtigung der jeweiligen Maschinen-Vorzugsarbeitsbereiche aber auch unter dem hinzuziehen wirtschaftlicher Aspekte geranked und dem jeweiligen Arbeitsvorgang zugewiesen. Als Ergebnis wird ein Ranking der Arbeitsplätze erstellt. Der Arbeitsplatz an erster Stelle der Rankingtabelle wird als Vorzugsarbeitsplatz einem Arbeitsvorgang zugewiesen.

In anderen Worten sind für die Fertigungs- und Montageabwicklung z. B. bei einer niedrigen Losgröße des Bauteils alternative Arbeitsplätze vorteilhaft, um Maschinenauslastungsabhängig die einzelnen Produkte bestmöglich durch die Produktion zu führen.

In einer weiteren Ausführungsform werden die geometrischen Parameter von einer Produktdefinitionsdatenbank bereitgestellt. Der Kunde kann so vorteilhaft in einer Datenbank die gewünschten Eigenschaften auswählen oder ein neues Produkt innerhalb der Familie anlegen. Die Produktdefinitionsdatenbank kann dabei neben Geometrie-Informationen auch weitere Informationen in Form von PMI, wie Rauigkeiten, Toleranzen, etc. aufweisen. Das Erzeugen des Arbeitsplans kann dann mit dem erfindungsgemäßen Verfahren problemlos und in Echtzeit geschehen.

In einer weiteren Ausführungsform werden die geometrischen Parameter aus einem 3D-CAD Modell des Bauteils abgeleitet werden. Besonders vorteilhaft ist es, wenn im 3D CAD Modell bereits die Fertigungsrelevanten Informationen inkl. Toleranzen hinterlegt sind.

In einer weiteren Ausführungsform weist das Arbeitsplanmodell Langtexte für jeden Arbeitsvorgang auf. Die Langtexte deren Arbeitsvorgänge der erzeugte Arbeitsplan aufweist werden mit den Arbeitsvorgängen in der richtigen Reihenfolge im Arbeitsplan bereitgestellt. So ist gewährleistet, dass die Informationen auch vollständig im Arbeitsplan vorhanden sind.

In einer weiteren Ausführungsform ist das Arbeitsplanmodell zum Generieren von computerlesbaren Arbeitsvorgängen ausgestaltet. Ergänzend oder alternativ zu den Langetexten kann das Arbeitsplanmodell auch vollständig computerlesbare Arbeitspläne ausgeben. Dies hat den Vorteil, dass diese dann direkt von einer automatisierten und digitalen Fertigung übernommen und abgearbeitet werden können. Hier können übliche Datenformate wie XML zum Einsatz kommen. Das Arbeitsplanmodell kann dabei zum Import in ein PLM-System und/oder ein ERP-System ausgestaltet sein.

Die Aufgabe wird weiterhin durch ein Computerprogrammprodukt gelöst, das ein Arbeitsplanmodell umfasst, wobei das Arbeitsplanmodell zum Erzeugen eines Arbeitsplans nach einem der erfindungsgemäßen Verfahren ausgebildet ist.

In einer weiteren Ausführungsform ist das Arbeitsplanmodell, insbesondere der auf Regeln basierende Entscheidungsbaum, als eine Low-Code Applikation ausgebildet. Die Struktur des Arbeitsplanmodells gemäß dem erfindungsgemäßen Verfahrens eignet sich sehr gut um mit Low-Code Plattformen erzeugt und verwaltet zu werden. Dabei können auswählbare Regeln zentral verwaltet und ggf. zentral modifiziert werden. Änderungen sind dabei nachverfolgbar und werden koordiniert innerhalb der Struktur übernommen. Dies hat den großen Vorteil, dass bestehende Teilefamilien einfach korrigiert und/oder erweitert und neue Teilefamilien schnell angelegt werden können.

Die Aufgabe wird weiterhin durch ein Arbeitsplanungssystem gelöst, das zumindest eine CPU, einen Arbeitsspeicher sowie eine Speichervorrichtung aufweist. Die Speichervorrichtung weist weiterhin ein erfindungsgemäßes Computerprogrammprodukt auf und die CPU ist zum Ausführen eines erfindungsgemäßen Arbeitsplanmodells zum Erzeugen eines Arbeitsplans ausgebildet.

Im Folgenden wird die Erfindung anhand der in den Figuren dargestellten Ausführungsbeispiele näher beschrieben und erläutert.

Die FIG zeigt ein Ausführungsbeispiel eines Arbeitsplanmodells.

FIG zeigt ein Ausführungsbeispiel eines Arbeitsplanmodells M200 für eine Teilefamilie 200, mit zwei beispielhaften geometrische Ausprägungen, den Bauteilen 20 und 21. Die Bauteile 20, 21 unterscheiden sich voneinander in den geometrischen Dimensionen, die sich in den geometrische Parametern P20 des Bauteils 20 bzw. des Bauteils 21 (nicht gezeigt) widerspiegeln. Die Bauteile können sich weiterhin auch in Nachbehandlung oder Oberflächenbehandlung (z.B. Härtungsart) und weiteren nichtgeometrischen Merkmalen voneinander unterscheiden; der Fokus des Arbeitsplans liegt dabei auf der Herstellung der geometrischen Merkmale. Die nichtgeometrischen Merkmale werden aber ebenso in den Arbeitsplan integriert und bei der Erstellung berücksichtigt. So können Toleranzen oder Rauigkeiten, falls angegeben, direkt mit vorgesehen werden.

Im Beispiel soll ein Stirnrad als Bauteil 20 dienen. Das Stirnrad kann dabei unter anderem die folgende Parameter P20 aufweisen:
CYL_D1 = Bohrungsdurchmesser
CYL_DT1 = Grundabmaß
L = Bohrungslänge
LT1 = Obere Toleranz
DA2 = Kopfkreisdurchmesser Verzahnung
W = Zahnweite
Bn_SITZ = Sitzart der Bohrung
CYL_DT2 = IT Klasse/Grundtoleranzgrad
LT2 = Untere Toleranz

Weiterhin ist, z. B. als Teil eines Arbeitsplanungssystems, eine schematische Darstellung des Arbeitsplanmodells M200 gezeigt. Das Arbeitsplanmodell M200 weist einen Entscheidungsbaum M210 mit Regeln R1,...,Rn und einer Initialisierung R0 auf. Die Initialisierung R0 kann dabei die Bereitstellung von Rohmaterialien sowie das Zuweisen einer Artikelnummer umfassen. Ausgehend von der Initialisierung R0 wird dann durch die Regeln R1,...,Rn ein Arbeitsplan WP20 erstellt.

Eine erste Regel R1 prüft im vorliegenden Beispiel den Kopfkreisdurchmesser des zu fertigenden Bauteils 20. Der Kopfkreisdurchmesser ist dabei in den Parametern P20 enthalten oder kann daraus abgeleitet / berechnet werden. Abhängig vom Kopfkreisdurchmesser wird ein Rohling ausgewählt und abhängig von der Größe des Rohlings wird entschieden, ob eine Zugabe in Abhängigkeit des Rohdurchmessers bei einem Zuschnitt (z.B. eines Stangenmaterials) notwendig ist. Auf Basis dieser ersten Regel R1 kann somit ein erster Arbeitsvorgang WS1 erzeugt werden. In anderen Worten wird im Anschluss an die Initialisierung R0, z. B. an die Rohmaterialzuweisung, die erste Regel R1 durchgeführt. So ist der Arbeitsvorgang Zuschneiden nur dann notwendig, wenn der Außendurchmesser des Rohmaterials größer als eine im Regelwerk hinterlegte Konstante ist.

In einem Beispiel wird zunächst das Rohmaterial zugeschnitten, bevor es anschließend in einem zweiten Arbeitsvorgang WS2 Drehen weiterbearbeitet wird. Der erste Arbeitsvorgang WS1 wird in diesem Fall um den Langtext "Zuschnitt Rohmaterial mit Zugabe b" ergänzt, wobei hier die im Langtext hinterlegte Variable b in Abhängigkeit vom Rohmaterialdurchmesser errechnet werden kann.

In einer zweiten Regel R2 wird der Außendurchmesser des fertigen Bauteils überprüft und weitere der zweite Arbeitsvorgang WS2 festgelegt.

Nach dem zweiten Arbeitsvorgang WS2 Drehen resultiert das notwendige Aufmaß aus einer dritten Regel R3 des Regelwerks. Ist das abgefragte Kriterium beispielsweise erfüllt, so wird ein konstantes Aufmaß c zu der bearbeiteten Fläche hinzuaddiert, sonst das konstante Aufmaß d.

So entstehen durch weitere Regeln R3 und R4 der gesamte Arbeitsplan WP20 für das Bauteil 20, der aus den Arbeitsvorgängen WS1,...,WSn in der richtigen Reihenfolge zusammengesetzt wird.

Die Struktur des Entscheidungsbaumes M210 als eine Maximalausprägung für die Bauteilfamilie 200 ermöglicht ein einfaches Modellieren der Bauteilfamilie 200. Des weiteren ist das Erweitern des Arbeitsplanmodells M200 um weitere geometrische Ausprägungen der Bauteilfamilie 200 problemlos möglich, z. B. durch Einfügen weiterer Regeln an den entsprechenden Stellen. Die Maximalausprägung des Arbeitsplanmodells muss dabei nicht alle Kombinationen der Bauteile 20, 21 umfassen, sondern kann auf bestimmte parametrierbare Kombinationen beschränkt sein, z. B.: auf Basis von Bereichen von geometrischen Parametern P20. Selbst auf der Basis von Bereichen von Parametern P20 ist die Anzahl der fertigbaren Bauteilen 20 als geometrische Ausprägungen der Teilefamilie 200 sehr hoch und problemlos mit dem Arbeitsplanmodell M200 und dem Entscheidungsbaum M210 abbildbar. Ein Entscheidungsbaum M210 kann dabei als Reihe von Fallunterscheidungen (Regeln) ausgebildet sein. Besonders vorteilhaft ist die gute Umsetzbarkeit des Arbeitsplanmodells M200 in modernen Low-Code Umgebungen, was die Einstiegshürde für ein derartiges Arbeitsplanmodell M200 deutlich senkt und eine zentrales Management der Regeln R1,...,Rn erheblich vereinfacht.

Für eine Arbeitsplatzzuordnung werden zunächst die verfügbaren Arbeitsplätze nach der Fertigungstechnologie wie beispielsweise Drehen oder Fräsen gefiltert, die zur Realisierung des Arbeitsvorgangs erforderlich ist. Anschließend werden die Rohmaterialmaße mit dem Arbeitsbereich der verfügbaren Maschinen (Arbeitsplätze) verglichen, um so eine Liste an Arbeitsplätzen zu erzeugen, die dazu in der Lage sind, den zuvor definierten Arbeitsvorgang umzusetzen. Durch die Hinterlegung der Maschinen-Vorzugs-Arbeitsbereiche können die Maschinen nochmals feiner in Abhängigkeit von der Rohteilgeometrie optimiert werden. Die verfügbaren Arbeitsplätze werden je Arbeitsvorgang unter der Berücksichtigung der jeweiligen Maschinen-Vorzugsarbeitsbereiche aber auch unter dem hinzuziehen wirtschaftlicher Aspekte gelistet und sortiert und dem jeweiligen Arbeitsvorgang WS1,...,WSn zugewiesen. Als Ergebnis wird ein Vorzugsliste der Arbeitsplätze erstellt.

Der Arbeitsplatz an erster Stelle der Vorzugsliste wird als Vorzugsarbeitsplatz einem Arbeitsvorgang zugewiesen. Wenn dieser nicht verfügbar ist, kann die Liste entsprechend abgearbeitet werden, wenn kein Arbeitsplatz mehr vorhanden ist, kann eine Fehlermeldung ausgegeben werden. Die verbleibenden Arbeitsplätze aus der Vorzugsliste können als alternative Arbeitsplätze dem Arbeitsvorgang WS1,...,WSn zugewiesen werden. Somit entstehen sogenannte alternative Arbeitsfolgen, die sich nur bezüglich des Arbeitsplatzes unterscheiden.

Der fertige Arbeitsplan WP20 kann schließlich direkt der Fertigung 300 oder einem Fertigungsfeinplanungstool zur Verfügung gestellt werden. Der Arbeitsplan WP20 kann sowohl maschinenlesbar, zur Arbeiterinstruktion als auch hybrid (Mensch/Maschine) ausgestaltet sein.

Die so z. B. durch das Siemens Mendix erstellten Arbeitspläne stellen eine ideale Inputgröße für ein Fertigungsfeinplanungstool, beispielsweise Preactor dar. Das Fertigungsfeinplanungstool ist im weiteren Verlauf in der Lage, die so eingehenden Fertigungsaufträge anhand von unter anderem Zieldatum in den realen Produktionsbetrieb einzuplanen, wobei hier die Arbeitsplatzalternativen inklusive Arbeitsplatz-Priorisierung eine Berechnungsgrundlage darstellen, die zu höherer Flexibilität und kürzeren Durchlaufzeiten führt.

Als Ergebnis nach Durchlauf des Arbeitsplanmodells bzw. des Regelwerks entsteht ein Arbeitsplan mit einem bestimmten Rohteil. In dem Arbeitsplan sind die für das Fertigteil, also das fertige Bauteil, alle benötigten Arbeitsvorgänge inklusive Langtexte aus der maximalen Ausprägung des Arbeitsplans reduziert. Zusätzlich kann aus dem Maschinen-Ranking je Arbeitsvorgang ein Vorzugsarbeitsplatz bestimmt und noch weitere alternative Arbeitsplätze dem Arbeitsvorgang zugewiesen werden.

Zusammenfassend betrifft die Erfindung ein Verfahren zum Erzeugen eines Arbeitsplans WP20 für ein Bauteil 20, ein Computerprogrammprodukt sowie ein Arbeitsplanungssystem. Um das automatisierte Erstellen von Arbeitsplänen WP20 für eine Vielzahl von Bauteilen 20 einer Teilefamilie 200 zu verbessern werden zum Erzeugen eines Arbeitsplans WP20 für ein Bauteil, das eine geometrische Ausprägung einer Teilefamilie 200 ist, die folgenden Schritte vorgeschlagen:
- Bereitstellen eines Arbeitsplanmodells M200 für die Teilefamilie 200, wobei das Arbeitsplanmodell M200 Arbeitsvorgänge WS1,...,WSn für voneinander verschiedene Ausprägungen von Bauteilen 20 umfasst,
- Bereitstellen von geometrischen Parametern P20 des Bauteils 20 als Eingangsgröße für das Arbeitsplanmodell M200 und
- Erzeugen des Arbeitsplans WP20 für das Bauteil 20 durch Reduzieren des Arbeitsplanmodells M200 auf die Arbeitsvorgänge WS1,...,WSn, die zum Herstellen des Bauteils 20 mit den geometrischen Parametern P20 notwendig sind.

Bezugszeichen
- 20, 21: Bauteil
- P20: geometrische Parameter des Bauteils
- WP20: Arbeitsplan zur Fertigung des Bauteils

- 200: Teilefamilie

- M200: Arbeitsplanmodell
- M210: Entscheidungsbaum
- R0: Initialisierung
- R1,...,Rn: Regeln des Arbeitsplanmodells
- WS1,...,WSn: Arbeitsvorgänge

- 100: Arbeitsplanungssystem
- 300: Fertigung

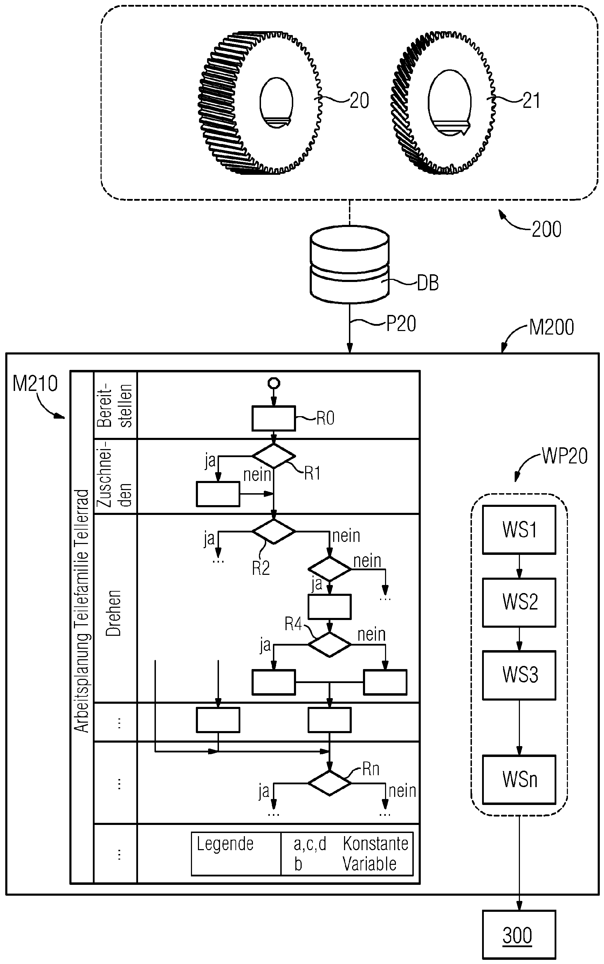

## Patentansprüche

1. Computerimplementiertes Verfahren zum Erzeugen eines Arbeitsplans (P20) für ein Bauteil (20), das eine geometrische Ausprägung einer Teilefamilie (200) ist, umfassend die Schritte:
- Bereitstellen eines Arbeitsplanmodells (M200) für die Teilefamilie (200), wobei das Arbeitsplanmodell (M200) Arbeitsvorgänge (WS1,...,WSn) für voneinander verschiedene Ausprägungen von Bauteilen (20) umfasst,
- Bereitstellen von geometrischen Parametern (P20) des Bauteils (20) als Eingangsgröße für das Arbeitsplanmodell (M200) und
- Erzeugen des Arbeitsplans (WP20) für das Bauteil (20) durch Reduzieren des Arbeitsplanmodells (M200) auf die Arbeitsvorgänge (WS1,...,WSn), die zum Herstellen des Bauteils (20) mit den geometrischen Parametern (P20) notwendig sind.

2. Verfahren nach Anspruch 1, wobei das Arbeitsplanmodell (M200) zumindest eine Regel (R1,...,Rn) aufweist, die auf Basis der geometrischen Parameter (P20) ein Rohmaterial für das Bauteil (20) auswählt.

3. Verfahren nach Anspruch 1 oder 2, wobei das Arbeitsplanmodell (M200) zumindest einen auf Regeln (R1,...,Rn) basierenden Entscheidungsbaum (M210) aufweist, wobei zumindest ein Teil der Arbeitsvorgänge (WS1,...,WSn) durch Anwendung der Regeln (R1,...,Rn) auf die geometrischen Parameter (P20) ermittelt wird.

4. Verfahren nach einem der vorhergehenden Ansprüche, wobei das Arbeitsplanmodell (M200) zum Erzeugen von Arbeitsvorgängen (WS1,...,WSn) für die subtraktive Bearbeitung des Bauteils (20) ausgebildet ist.

5. Verfahren nach einem der vorhergehenden Ansprüche, wobei das Arbeitsplanmodell (M200) zumindest eine Regel (R1,...,Rn) aufweist, die auf Basis ein oder mehrerer der geometrischen Parameter (P20) Zugabewerte für einzelne Dimensionen des Bauteils (20) ermittelt.

6. Verfahren nach einem der vorhergehenden Ansprüche, wobei zum Erzeugen des Arbeitsplans (WP20) für jeden Arbeitsvorgang (WS1,...,WSn) ein Arbeitsplatz bestimmt wird.

7. Verfahren nach einem der vorhergehenden Ansprüche, wobei zum Erzeugen des Arbeitsplans (WP20) für zumindest einen Teil der Arbeitsvorgänge (WS1,...,WSn) ein bevorzugter Arbeitsplatz und alternative Arbeitsplätze bestimmt werden.

8. Verfahren nach einem der vorhergehenden Ansprüche, wobei die geometrischen Parameter (P20) von einer Produktdefinitionsdatenbank (DB) bereitgestellt werden.

9. Verfahren nach einem der vorhergehenden Ansprüche, wobei die geometrischen Parameter (P20) aus einem 3D-CAD Modell des Bauteils (20) abgeleitet werden.

10. Verfahren nach einem der vorhergehenden Ansprüche, wobei das Arbeitsplanmodell (M200) Langtexte für jeden Arbeitsvorgang (WS1,...,WSn) aufweist, wobei die Langtexte im Arbeitsplan (WP20) bereitgestellt werden, deren Arbeitsvorgänge (WS1,...,WSn) der erzeugte Arbeitsplan (WP20) aufweist.

11. Verfahren nach einem der vorhergehenden Ansprüche, wobei das Arbeitsplanmodell (M200) zum Generieren von computerlesbaren Arbeitsvorgängen (WS1,...,WSn) ausgestaltet ist.

12. Computerprogrammprodukt umfassend ein Arbeitsplanmodell (M200) das zum Erzeugen eines Arbeitsplans (P20) nach einem Verfahren nach einem der vorhergehenden Ansprüche ausgebildet ist.

13. Computerprogrammprodukt nach Anspruch 11, wobei das Arbeitsplanmodell (M200), insbesondere der auf Regeln (R1,...,Rn) basierende Entscheidungsbaum (M210), als eine Low-Code Applikation ausgebildet ist.

14. Arbeitsplanungssystem (100), aufweisend zumindest eine CPU, einen Arbeitsspeicher sowie eine Speichervorrichtung, wobei die Speichervorrichtung ein Computerprogrammprodukt nach Anspruch XX oder yy aufweist und wobei die CPU zum Ausführen eines Arbeitsplanmodells (M200) zum Erzeugen eines Arbeitsplans (WP20) nach einem Verfahren nach einem der Ansprüche 1 bis 10 ausgebildet ist.
